# EUROPEAN PATENT SPECIFICATION

(11) **EP 0 510 666 B1**
(45) Date of publication and mention of the grant of the patent: **14.08.1996**
(21) Application number: 92107024.9
(22) Date of filing: 24.04.1992
(51) Int. Cl.: F16J 15/10, C09K 3/10

(54) **Heat-resistant and oil-resistant sealing member**
Hitze- und Ölbeständiges Dichtungsglied
Elément d'étanchéité résistant à la chaleur et à l'huile

(30) Priority: 25.04.1991 JP 95781/91
(43) Date of publication of application: 28.10.1992
(73) Proprietor: NIPPONDENSO CO., LTD., Kariya-shi Aichi-ken (JP)
(72) Inventor: Tanaka, Norio, Handa-shi (JP); Tomita, Masahiro, Obu-shi (JP); Oda, Shogo, Gamagori-shi (JP)
(74) Representative: Tiedtke, Harro, Dipl.-Ing.

(56) References cited:
- DE-A- 3 718 559
- DE-A- 3 731 032
- US-A- 4 736 956

## Description

### BACKGROUND OF THE INVENTION

### Field of the Invention

The present invention relates to a heat-resistant and oil-resistant sealing member.

### Description of the Related Art

As the material for constituting the gasket for oil filter which is known as a heat-resistant and oil-resistant member, NBR (acrylonitrile-butadiene rubber) has hitherto been used from the viewpoint of oil resistance. However, the improvement in the performance of engine in the recent years has resulted in elevation of oil temperature, and the alteration of the position of oil filter has caused elevation of the temperature of atmosphere. Thus, the gasket made of NBR today in use has already reached a limit from the viewpoint of heat resistance. At present, a material excellent in heat resistance and oil resistance and capable of replacing NBR is waited for.

As a material excellent in both heat resistance and oil resistance, acrylic rubber can be referred to. Although silicone rubber is also known as a material excellent in heat resistance, it is inferior to acrylic rubber in oil resistance and low in mechanical strength. Accordingly, the use of acrylic rubber as a material for oil filter gasket is expected.

However, acrylic rubber readily adheres and becomes fixed onto metallic materials, particularly ferrous materials such as cast iron and the like, at a high temperature of about 100°C or above. Accordingly, if acrylic rubber is used as a material of oil filter gasket, the acrylic rubber adheres and becomes fixed onto the engine block, and fragments of acrylic rubber are left on the surface of engine block as an opponent material at the time of exchanging the filter.

The present invention has been made with the aim of solving the above-mentioned problem, and its object consists in providing a heat-resistant and oil-resistant sealing member excellent in heat resistance and oil resistance and prevented from fixation onto opponent member.

### SUMMARY OF THE INVENTION

This object of the present invention is solved by the heat-resistant and oil resistant sealing member according to claim 1.

A characteristic feature of the heat-resistant and oil-resistant sealing member of the present invention consists in that it is constituted of a mainly body of a sealing member made of acrylic rubber and a fixation-preventive layer for preventing the fixation of the main body of sealing member onto a prescribed opponent member, said layer being formed at least on the bonding surface of the main body of sealing member to be contacted with the opponent member.

The shape of the main body of sealing member is not critical. Though the kind of acrylic rubber constituting the main body of sealing member is not critical, a cryogenic type acrylic rubber excellent in low temperature characteristics can be used, for example.

The fixation-preventive layer prevents the acrylic rubber constituting the main body of sealing member from fixation onto the surface of a metallic opponent member, and it is formed at least on a surface of the main body of sealing member which is to be prevented from fixation onto the opponent member. The fixation-preventive layer has a thickness of 3-35 µm. If thickness of the fixation-preventive layer is smaller than 3 µm, it is low in fixation-preventive effect. If its thickness is greater than 35 µm, productivity of film formation is low.

The fixation-preventive layer can be formed as a film on the surface of the acrylic rubber constituting the main body of the sealing member, and its material comprises a silicone resin or a silicone rubber. A fixation-preventive layer made of silicone resin or silicone rubber can be formed by coating a solution of silicone resin or silicone rubber onto a prescribed area of main body of a sealing member and firing it at a temperature of 100-200°C for 5-30 minutes.

As the silicone resin, those represented by the following composition formulas, wherein n and m are each an integer of 1 or greater, can be used, for example:

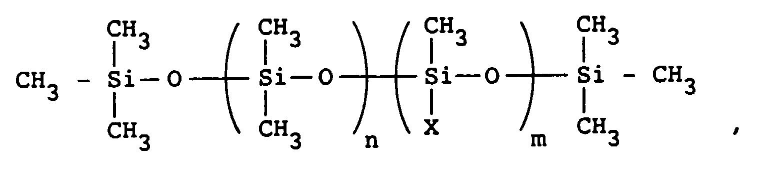

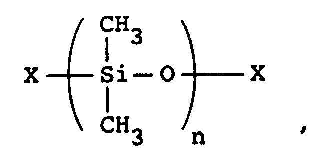

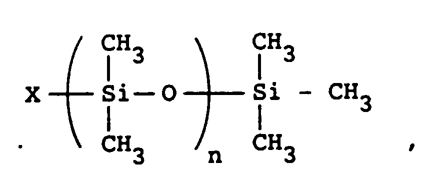

As the silicone rubber, those represented by the following formula, wherein n is an integer of 1 or greater, can be used, for example:

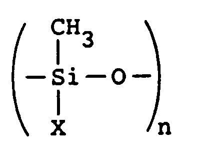

In the formulas presented above, X represents one member selected from the group consisting of silanol, hydrogen, alkoxy, amino, carboxyl, alcohol, epoxy, phenyl and the like.

Since the main body of the heat-resistant and oil-resistant sealing member of the present invention is constituted of acrylic rubber, it is excellent in both heat-resistance and oil-resistance. Further, since it has a fixation-preventive layer formed on the surface to be contacted with opponent member, the main body of sealing member is prevented from direct contact with the prescribed opponent member, so that fixation between the main body of sealing member and the opponent member can be prevented with certainty.

### BRIEF DESCRIPTION OF THE DRAWINGS

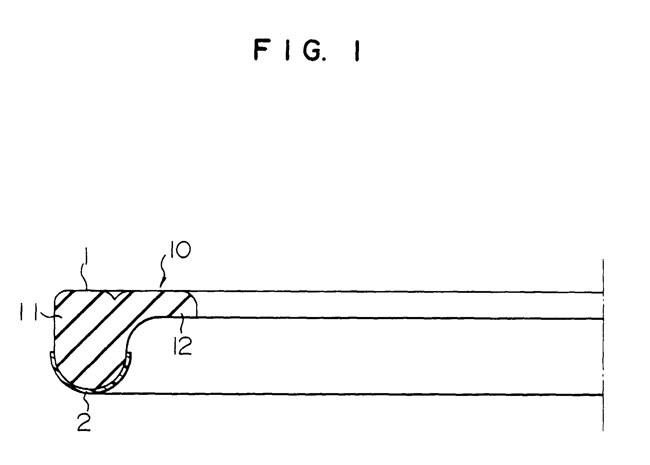

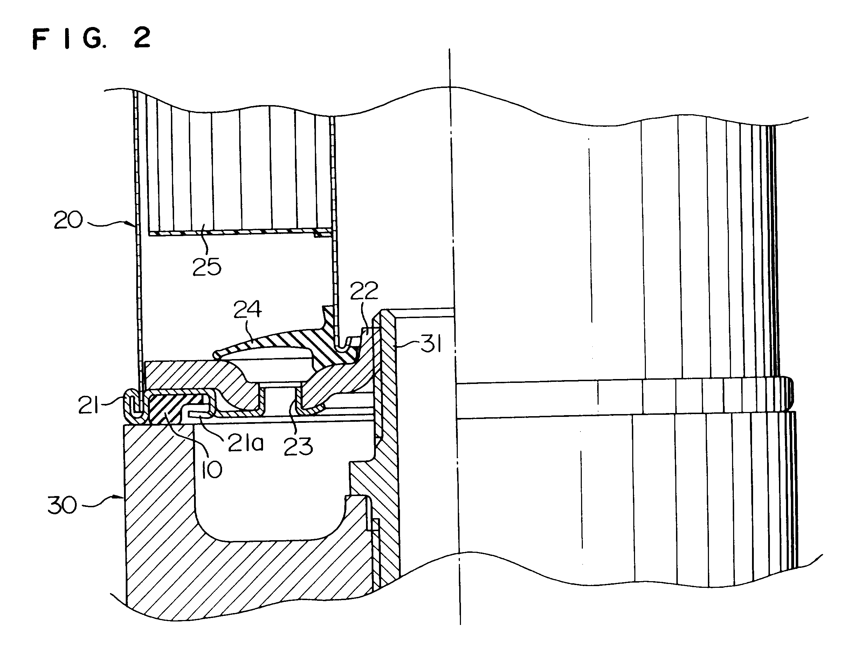

Figure 1 is a partial sectional view illustrating the left half of the oil filter gasket according to the invention; and Figure 2 is a partial sectional view illustrating the relation between an oil filter gasket according to the invention, an oil filter and an engine block; wherein 1 is main body of gasket constituting the main body of sealing member, and 2 is fixation-preventive layer.

### DESCRIPTION OF THE PREFERRED EMBODIMENTS

Hereinunder, the heat-resistant oil-resistant sealing member of the present invention is explained by referring to examples of application to oil filter gasket.

The oil filter gasket 10 of the present invention has a ring-like shape as its whole, and constituted of a main body of gasket 1 and a fixation-preventive layer 2, said main body of gasket 1 consisting of a ring-like thick-gage seal part 11 compressed and held between oil filter and engine block and a ring-like thin-gage holder part 12 integrally and horizontally extending from the upper part of the inner periphery of seal part 11 (Figure 1, middle), and said fixation-preventive layer 2 being a coating layer continuously covering the whole lower surface of the seal part 11 and the upper part of the lateral surface of the sealing member 11. The holder part 12 of the main body of gasket 1 is held by nails of oil filter, the upside surface of main body of gasket 1 is contacted with oil filter, and the fixation-preventive layer 2 formed on the downside surface of seal part 11 is contacted with engine block.

The main body of gasket 1 is made of a cryogenic type acrylic rubber.

The fixation-preventive layer 2 is made of a silicone resin. The fixation-preventive layer 2 was formed in the following manner. Thus, at first, a silicone resin represented by the following composition formula, wherein n is an integer of 1 or greater, was dissolved into a solvent (toluene), and a silane coupler or the like was added thereto as a reaction catalyst to prepare a solution.

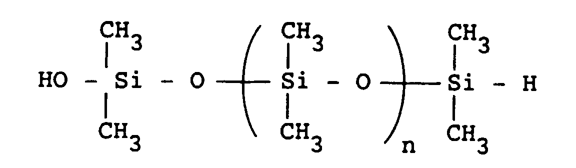

While rotating the main body of gasket 1, the solution was sprayed thereto from a nozzle, by which a prescribed area of the seal part 11 of the main body of gasket 1 was coated with the solution. Then, it was fired at 175°C for 10 minutes, whereby the silicone resin and the acrylic rubber were condensed with each other to form a fixation-preventive layer 2 having a thickness of 5 µm on the prescribed area of seal part 11 of the main body of gasket 1.

Since the main body of gasket 1 is formed of an acrylic rubber, the gasket 10 of this example is quite excellent in heat resistance and oil resistance.

Further, since a fixation-preventive layer 2 consisting of a silicone resin is formed on its surface to be contacted with engine block, the acrylic rubber can be prevented from coming into a direct contact with engine block, and the fixation of the acrylic rubber onto the engine block can be prevented with certainty.

Further, in the gasket 10 of this example, the fixation-preventive layer 2 is formed only on the surface between main body of gasket 1 and engine block, and no fixation-preventive layer is formed on the surface with oil filter. Accordingly, gasket 10 is prevented from fixation onto engine block and is readily fixable onto oil filter. For this reason, at the time of exchanging the oil filter, the gasket 10 can easily be released from the engine block while fixing and holding the gasket 10 on the oil filter without leaving any fragments of the acrylic rubber constituting the main body of gasket 1 on the engine block.

Further, since the acrylic rubber constituting the main body of gasket 1 and the silicone resin constituting the fixation-preventive layer 2 are chemically bonded to each other by a condensation reaction, the release between the main body of gasket 1 and the fixation-preventive layer 2 is also prevented. (Evaluation)

An oil filter 20 to which an oil filter gasket 10 of the above-presented example had been attached as shown in Figure 2 was fit into an engine block 30 of a car, and the car was made to run with monitor for a distance of 20,000 to 25,000 km, after which the force of fixation between gasket 10 and engine block 30 was measured. The measurement was carried out by pulling the gasket 10 by means of a spring balance and measuring the maximum load (g) required for releasing gasket 10 from engine block 30 as a force of fixation. The measurements were conducted on nine gasket samples having the same constitution. The results obtained are summarized in Table 1 as sample numbers 1-9. For comparison, comparative gaskets constituted in the same manner as the above except that no fixation-preventive layer 2 was formed were similarly examined for force of fixation, wherein the measurements were conducted on four samples. The results are also shown in Table 1 as sample numbers 10-13.

Gasket 10 is held by the nails 21a formed on the iron bottom surface 21 constituting oil filter 20. The oil filter 20 is provided with a central exhaust slot 22 screwed in the central cylinder part 31 of the engine block 30 made of cast iron, a sucking inlet 23 sucking the oil from the engine block 30, a valve member 24 made of rubber preventing the back flow of oil from the sucking inlet 23, and a filter 25 cleaning the oil. The oil having been cleaned by filter 25 passes the inner space of the central cylinder part 31 and is sent to the engine block 30.

**Table 1**

| | | | | | | | | | | | | | |
|---|---|---|---|---|---|---|---|---|---|---|---|---|---|
| Sample No. | 1 | 2 | 3 | 4 | 5 | 6 | 7 | 8 | 9 | 10 | 11 | 12 | 13 |
| Force of fixation | 0 | 0 | 5 | 5 | 10 | 10 | 20 | 30 | 40 | 290 | 390 | 420 | 440 |

It is apparent from Table 1 that, as compared with the gasket of Comparative Example in which no fixation-preventive layer is formed, the gasket of the present invention 10 in which a fixation-preventive layer 2 made of silicone resin is formed on the surface facing engine block 30 is much lessened in fixation force onto engine block 30.

When the main body of gasket 1 is formed of other acrylic rubber or when the fixation-preventive layer 2 is formed of other silicone resin or silicone rubber, too, the results obtained were comparative to those shown above. A fixation-preventive layer made of a silicone resin or a silicone rubber exhibits a fixation-preventive effect not only to an opponent member made of cast iron shown above but also to nonferrous opponent member made of aluminum alloy or the like.

In the example presented above, the heat-resistant and oil-resistant sealing member of the present invention was applied to an oil filter gasket. The heat-resistant and oil-resistant sealing member of the present invention is also applicable to other members which must be resistant to heat and oil and may make a trouble if its rubber component adheres to the opponent member, such as O ring used as a piping of engine room requiring maintenance, and the like.

As has been detailed above, the heat-resistant and oil-resistant sealing member of the present invention is quite excellent in heat-resistance and oil-resistance and high in mechanical strength because its main body is formed of an acrylic rubber, and main body of the heat-resistant and oil-resistant sealing member of the present invention is prevented with certainty from fixation onto opponent member because a fixation-preventive layer is formed on a prescribed area of the main body of sealing member.

Accordingly, the heat-resistant and oil-resistant sealing member of the invention is applicable with a high reliability to a position where a heat-resistance and oil-resistance are required and fixation of rubber to the opponent member makes a trouble.

A sealing member having a main body made of an acrylic rubber and a fixation-preventive layer made of a silicone resin or a silicone rubber. The fixation-preventive layer is formed at least on a surface of the main body facing an opponent member such as an engine block. The fixation-preventive layer is to prevent the sealing member such as a gasket from fixing to the opponent member which is to be contacted with the sealing member.

## Claims

1. A heat- resistant and oil-resistant sealing member (10) comprising:
a main body (1) comprising an acrylic rubber and a fixation-preventive layer (2) comprising a silicone resin or a silicone rubber formed on said main body being at least on the surface of said body facing an opposing member (30) to prevent said sealing member from fixing to said opposing member, wherein said main body and said fixation-preventive layer are chemically bonded to each other through a silane coupling agent by a condensation reaction, and said fixation-preventive layer has a thickness of 3-35 µm.

2. A heat-resistant and oil-resistant sealing member (10) according to Claim 1, wherein said fixation-preventive layer (2) is made of a silicone resin represented by one -of the following formulas: 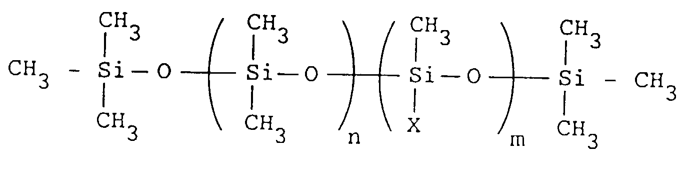 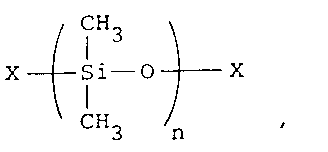 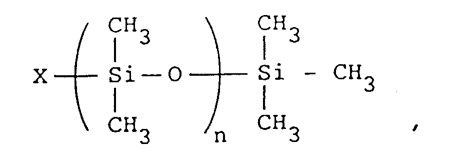 wherein n and m are each an integer of 1 or greater and X represents one member selected from the group consisting of silanol, hydrogen, alkoxy, amino, carboxyl, alcohol, epoxy and phenyl.

3. A heat-resistant and oil-resistant sealing member (10) according to Claim 1, wherein said fixation-preventive layer (2) is made of a silicone rubber.

4. A heat-resistant and oil-resistant sealing member (10) according to Claim 1, wherein said fixation-preventive layer (2) is made of a silicone rubber represented by the following formula: 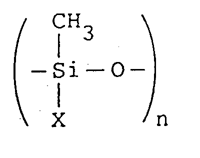 wherein n is an integer of 1 or greater and X represents one selected from the group consisting of silanol, hydrogen, alkoxy, amino, carboxyl, alcohol epoxy and phenyl.

5. A heat-resistant and oil-resistant sealing member (10) according to Claim 1, wherein said fixation-preventive layer (12) is formed only on the surface facing the opposing member (30).

6. A heat-resistant and oil-resistant oil filter sealing member (10) comprising a main body (1) consisting essentially of an acrylic rubber; and
a fixation-preventive layer (2) comprising a silicone resin or a silicone rubber formed on said main body being at least on a surface of said body facing a surface to be sealed to an oil filter (20) to prevent said sealing member from fixing to said surface to be sealed, wherein said main body and said fixation-preventive layer are chemically bonded to each other through a silane coupling agent by a condensation reaction; and said fixation-preventive layer has a thickness of 3-35µm.

## Patentansprüche

1. Wärme- und ölbeständiges Dichtungselement (10), das die nachstehenden Bestandteile umfaßt:
einen Hauptkörper (1), der einen Akrylatkautschuk umfaßt, und eine Schicht (2) zur Verhinderung eines Aneinanderhaftens, die ein auf dem Hauptkörper gebildetes Silikonharz oder einen Silikongummi umfaßt, und sich zumindest auf der Fläche des Hauptkörpers befindet, die einem gegenüberliegenden Element (30) zugewandt ist, um eine Haftung des .Dichtungselements an das gegenüberliegende Element zu verhindern, wobei der Hauptkörper und die Schicht zur Verhinderung eines Aneinanderhaftens mittels eines Silan-Haftvermittlers durch eine Kondensationsreaktion chemisch aneinander gebunden sind und die Schicht zur Verhinderung eines Aneinanderhaftens eine Dicke von 3 bis 35 µm aufweist.

2. Wärme- und ölbeständiges Dichtungselement (10) nach Anspruch 1, wobei die Schicht (2) zur Verhinderung eines Aneinanderhaftens aus einem Silikonharz hergestellt ist, das durch eine der nachstehenden Formeln dargestellt wird: 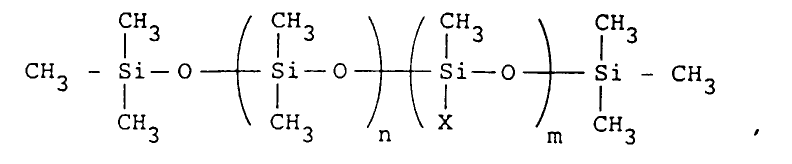 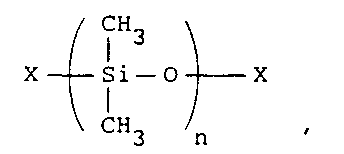 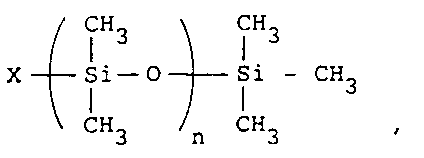 wobei n und m jeweils eine ganze Zahl, 1 oder höher, darstellen und X ein Element darstellt, das aus der Gruppe bestehend aus einer Silanolgruppe, Wasserstoff, einer Alkoxy-, Amino-, Carboxyl-, Alkohol-, Epoxy- und Phenylgruppe ausgewählt ist.

3. Wärme- und ölbeständiges Dichtungselement (10) nach Anspruch 1, wobei die Schicht (2) zur Verhinderung eines Aneinanderhaftens aus Silikongummi hergestellt ist.

4. Wärme- und ölbeständiges Dichtungselement (10) nach Anspruch 1, wobei die Schicht (2) zur Verhinderung eines Aneinanderhaftens aus einem Silikongummi hergestellt ist, der durch die nachstehende Formel dargestellt wird: 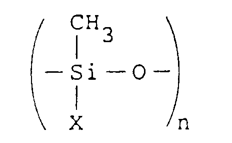 worin n eine ganze Zahl, 1 oder größer, ist und X ein Element darstellt, das aus der Gruppe bestehend aus einer Silanolgruppe, Wasserstoff, einer Alkoxy-, Amino-, Carboxyl-, Alkohol-, Epoxy- und Phenylgruppe ausgewählt ist

5. Wärme- und ölbeständiges Dichtungselement (10) nach Anspruch 1, wobei die Schicht (2) zur Verhinderung eines Aneinanderhaftens nur auf der Oberfläche gebildet ist, die dem gegenüberliegenden Element (30) zugewandt ist.

6. Wärme- und ölbeständiges Ölfilter-Dichtungselement (10), umfassend einen Hauptkörper (1), der im wesentlichen aus einem Akrylatkautschuk besteht; und
eine Schicht (2) zur Verhinderung eines Aneinanderhaftens, die ein auf dem Hauptkörper gebildetes Silikonharz oder einen Silikongummi umfaßt, und sich zumindest auf einer Fläche des Körpers befindet, die einer Fläche gegenüberliegt, die in bezug auf einen Ölfilter (20) abgedichtet werden soll, um ein Anhaften des Dichtungselements an die abzudichtende Fläche zu verhindern, wobei der Hauptkörper und die Schicht zur Verhinderung eines Aneinanderhaftens mittels eines Silan-Haftvermittlers durch eine Kondensationsreaktion chemisch aneinander gebunden sind und die Schicht zur Verhinderung eines Aneinanderhaftens eine Dicke von 3 bis 35 µm aufweist.

## Revendications

1. Elément d'étanchéité (10) résistant à la chaleur et à l'huile, comprenant :
un corps principal (1) comprenant un caoutchouc acrylique et une couche anti-fixation (2) comprenant une résine silicone ou un caoutchouc silicone formé sur le corps principal, au moins la surface du corps faisant face à un élément en regard (30) pour empêcher l'élément d'étanchéité de se fixer sur l'élément en regard, dans lequel le corps principal et la couche anti-fixation sont chimiquement liés l'un *à* l'autre par le biais d'un agent de couplage silane par réaction de condensation, et la couche anti-fixation a une épaisseur de 3-35 µm.

2. Elément d'étanchéité (10) résistant à la chaleur et à l'huile selon la revendication 1, dans lequel la couche anti-fixation (2) est réalisée en résine silicone représentée par l'une des formules suivantes : 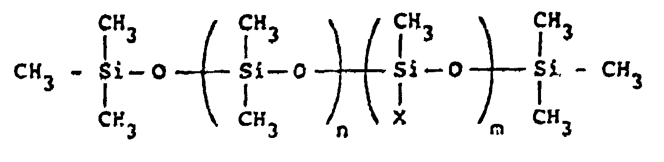 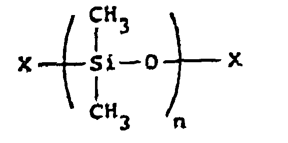 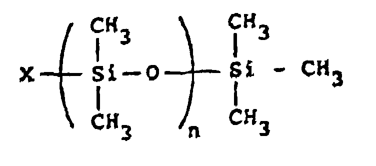 où n et m sont chacun un nombre entier de 1 ou supérieur et X représente un élément choisi dans le groupe consistant en silanol, hydrogène, alcoxy, amino, carboxyle, alcool, époxy et phényle.

3. Elément d'étanchéité (10) résistant à la chaleur et à l'huile selon la revendication 1, dans lequel la couche anti-fixation (2) est réalisés en caoutchouc silicone.

4. Elément d'étanchéité (10) résistant à la chaleur et à l'huile selon la revendication 1, dans lequel la couche anti-fixation (2) est réalisée en un caoutchouc silicone représenté par la formule suivante : 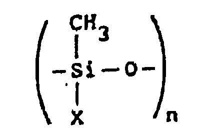 dans laquelle n est un nombre entier de 1 ou supérieur et X représente un élément choisi dans le groupe consistant en silenol, hydrogène, alcoxy, amino, carboxyle, alcool, époxy et phényle.

5. Elément d'étanchéité (10) résistant à la chaleur et à l'huile selon la revendication 1, dans lequel la couche anti-fixation (2) n'est formée qu'à la surface en regard de l'élément opposé (30).

6. Elément d'étanchéité (10) de filtre d'huile résistant à la chaleur et à l'huile, comprenant un corps principal consistant essentiellement en un caoutchouc acrylique ; et
une couche anti-fixation (2) comprenant une résine silicone ou un caoutchouc silicone formée sur le corps principal au moins à la surface du corps en regard de la surface à rendre étanche sur un filtre d'huile (20) pour empêcher l'élément d'étanchéité de se fixer sur la surface à rendre étanche, dans lequel le corps principal et la couche anti-fixation sont chimiquement liés l'un sur l'autre par le biais d'un agent de couplage silane par réaction de condensation; et la couche anti-fixation a une épaisseur de 3-35 µm.
